(19) Europäisches Patentamt
European Patent Office
Office européen des brevets

(11) **EP 0 579 829 B1**

(12) **EUROPEAN PATENT SPECIFICATION**

(45) Date of publication and mention
of the grant of the patent:
**20.05.1998 Bulletin 1998/21**

(21) Application number: **93917404.1**

(22) Date of filing: **11.02.1993**

(51) Int Cl.6: **G01N 15/14**

(86) International application number:
**PCT/GB93/00289**

(87) International publication number:
**WO 93/16368 (19.08.1993 Gazette 1993/20)**

(54) **PARTICLE MEASUREMENT SYSTEM**

Einrichtung zur Messung von Teilchen

SYSTEME DE MESURE DE PARTICULES

(84) Designated Contracting States:
**AT BE CH DE DK ES FR GB GR IE IT LI LU MC NL PT SE**

(30) Priority: **12.02.1992 GB 9202887**

(43) Date of publication of application:
**26.01.1994 Bulletin 1994/04**

(73) Proprietor: **CAMBRIDGE CONSULTANTS LIMITED Cambridge CB4 4DW (GB)**

(72) Inventors:
- **JONES, Robert Cambridge CB4 3AH (GB)**
- **HAZELL, Michael, Stuart Cambridge CB1 2PF (GB)**

(74) Representative:
**Beresford, Keith Denis Lewis et al BERESFORD & Co. 2-5 Warwick Court High Holborn London WC1R 5DJ (GB)**

(56) References cited:
EP-A- 0 426 341          GB-A- 2 054 143
US-A- 3 819 270          US-A- 3 941 479
US-A- 4 573 796          US-A- 4 893 929
US-A- 4 986 659

- **PATENT ABSTRACTS OF JAPAN vol. 12, no. 488 (P-803)(3335) 20 December 1988 & JP,A,63 201 554 ( CANON ) 19 August 1988**

# Description

The present invention relates to the optical measurement of particles and particularly, though not exclusively, to the measurement of particle sizes.

Particle sizing by means of optical techniques using Doppler methods which measure the amount of light scattered by the particle as it passes through a light field is widely practised. For biological particles of diameter 1-10um and sub-micron particles the scattered light levels are low. Usually therefore particles are made to flow in a focused light field through a flow cell.

Particular sizing techniques based on Doppler methods require the interferometric combination of crossed laser beams to create a structured pattern. This requires the coherent laser light sources and precision lasers, or more recently, the use of diffraction gratings. The extent of the structured light field necessarily occupies a large part of the inspection volume and consequently requires quality optical components. These requirements are not consistent with the manufacture of a low cost particle sizing equipment.

A problem of known techniques that rely purely on scattered light is that the region of focus is frequently subject to significant variations in radiant intensity when it occupies practical sample volumes. A given particle passing a region of high focal intensity can therefore scatter the same signal as a larger particle in a region of defocus. It has been proposed to overcome this problem by providing a composite light beam incorporating a concentric trigger of one wavelength through the centre of a surrounding analysis beam having a second wavelength. Only particles whose presence is indicated by the trigger beam are analysed. This occurs when the particle traverses the uniform region of the analysis beam. Measurements of the intensity of scattered light are thus made under repeatable conditions of particle illumination. This technique still requires high precision optics however and does not overcome the difficulty that the intensity of light scattered by particles is not a single valued function of the particle size, so that light intensity does not necessarily provide a reliable indication of particle size.

For example in medical bacteria tests in urine, tests for bacteria (typically 1-4um) may not clearly be distinguished from residual red cells (5-8um) or even white cells (10-15um). Additionally still greater expense and complexity is involved.

The present invention is concerned with reducing the above mentioned disadvantages.

Patent Abstracts of Japan, vol. 12, no. 488 (P-803) (3335) 20 December 1988 & JP-A-63201554 (Canon) 19 August 1988 discloses a particle velocity measurement apparatus in which particles flow through a light beam which has been diffracted to form a spectrum image.

EP-A-0,426,341 discloses a particle measurement system in which two laser beams are interferometrically combined to provide a probe volume through which the particles to be measured pass. Two sensors are provided to detect light scattered in different directions so as to generate Doppler signals from which particle velocity and size may be derived.

According to one aspect of the present invention there is provided apparatus for measuring a particle size as set out in claim 1.

According to a second aspect the present invention comprises a method of measuring the size of particles as set out in claim 8.

Various embodiments of the invention will now be described by way of example and with reference to the following drawings in which:

Figures 1 and 1A illustrate the layout of optical components in one form of particle size according to the invention;

Figure 2 is a block diagram of a typical signal processing system for the analysis of a particle size distribution based on signals from the light detector of Figure 1;

Figure 3 shows a general form of an output signal generated by the embodiment of Figure 1;

Figure 4(a)-(d) shows experimental results of the voltage output signal from the detector of the embodiment of Figure 1;

Figure 5 shows a scatter plot derived from structured outputs showing distribution of particles in the range 9u to 3um; and

Figures 6A and B show alternative embodiments of light detection optics systems.

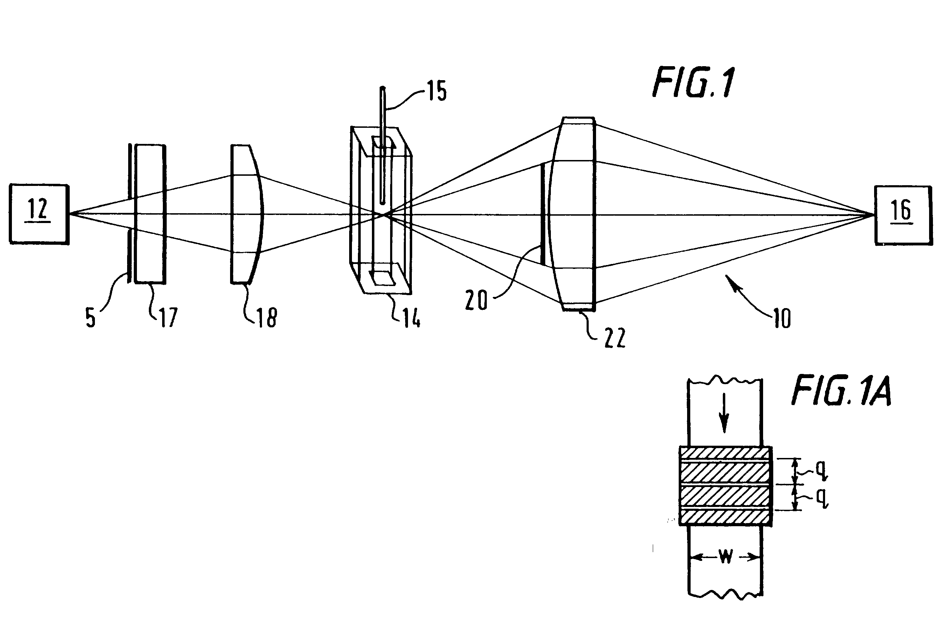

Referring now to Figure 1 of the accompanying drawings this shows the optical layout of one embodiment of apparatus according to the present invention for sizing particles in a fluid stream and is generally indicated at 10 for sizing particles in a fluid stream. A potential application of the apparatus is to detect the presence of bacteria in urine. However it will be appreciated that the apparatus could also be used in a similar manner to measure particles carried in a gaseous medium, and that the term "fluid medium" as used in the present specification is intended to cover both gaseous and liquid media.

The apparatus 10 comprises a light source 12, a flow cell 14 and a light detector 16.

The light source 12 is a structured light source comprising an array of discrete light emitting elements uniformly separated. In a preferred form the structured light source 12 is realised by laser diodes having multiple facets. The source illustrated comprises three facets, but may in practice incorporate any suitable number of uniformly separated emitting elements.

The light source 12 is imaged by the aperture 15 and cylindrical lenses 17 and 18 into the inspection volume of the flow cell 14. In the preferred embodiment of the invention the structured light source comprises a laser diode, e.g. Sharp type LTO9OMFO(TM) in which the three light emitting facets are strips approximately 3 microns by 1 micron and separated by 50 microns. For the detection of E coelli in urine the magnification of the lens systems 17 and 18 is chosen so that the separation of the intensity peaks in the focused image is approximately 5 microns. Thus in the embodiment being described the actual volume of fluid in the effective area of light is approximately 20 x 20 x 20 microns. It is possible for the fluid under test to be passed through a standard flow cell but it is preferred to inject a stream of fluid into a cell 14 by means of a narrow bore pipe 15 such as a hypodermic needle so that the stream passes through the focused light. In such a case the diameter of the bore of the needle is preferably between 100 to 300 microns. The fluid can be supplied under gravity or by a suitable pump.

Figure la shows a stream of fluid passing through the three focused facets of the light source 12. As shown in Figure la the image of the line source facets section the flow cell normal to the flow direction and extend beyond the width (w) of the flow cell. The depth of focus is ideally made greater than the cell depth although this is not a fundamental requirement. The magnification of the cylindrical lenses is also chosen so that the separation (q) of the image bars or lines approximate to the range of particle size to be measured.

Light from the image volume in the flow cell is collected by lens 22 into the detector 16. A stop 20 is sized so that normally in the absence of particles or other scattering sites in the image column the detector 16 is not illuminated, whilst forward scattered light is collected and detected. The detector 16 can be a PIN diode or an avalanche photo-diode.

Particles that traverse the focused light field are thus exposed to light from each facet or focused variation in light intensity in turn. The intensity of light detected is thus modulated with a frequency q/u, where u is the particle traverse velocity and with intensity given by the convolution of the particle scattering cross section with the structured light image. A particle p of diameter d where d>>q effectively smears out the structure and an event of uniform intensity is displayed.

Particles for which d>q partially resolve the structure and thus partially modulate the signal intensity and particles for which d>>q fully resolve the structure and display full modulation with intensity limited only by the detection noise limit.

It will be appreciated that the embodiment being described is capable of measuring bacterial particles which are poor absorbers of light. If the apparatus is intended to measure particles which are good light absorbers then a simple obscuration method could be employed. In such a case the stop 20 could be omitted so that the output of detector 16 would normally be high and the passage of particles through the inspection volume would cause appropriate reductions in the measured light input. However with poorly absorbent particles the signals caused by particle obstruction are small compared to the noise level of the light sensor gemerated by the directly incident radiation and it is for this reason that a system which detects scattered light is preferred.

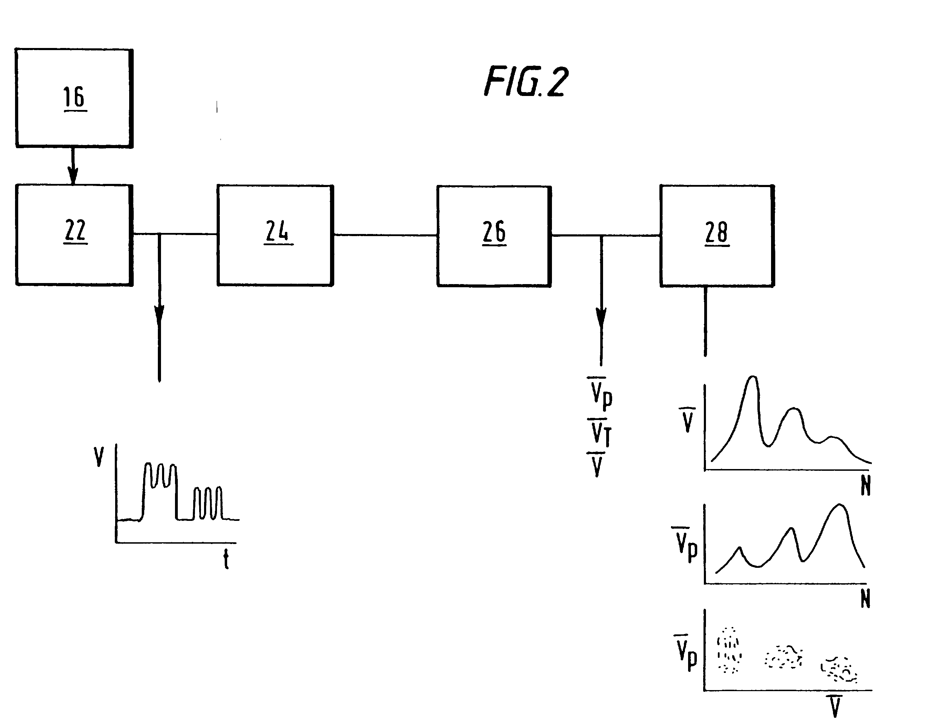

The processing of the output signal will now be described by reference to the block diagram illustrated in figure 2.

When a particle traverses the inspection volume of the flow cell light scattered in the structured light field by the particle is collected in the detector 16 to generate an output signal which is amplified by an amplifier 22, thresholded by a threshold circuit 24, sampled by an Analogue-to-Digital convertor 24 and analysed by a suitable microprocessor unit 26. A display unit is shown at 28 for displaying the results of the analysis and can take a wide number of different formats such as a CRT-based video system or hard copy device such as a plotter, whilst the microprocessor unit can be a PC.

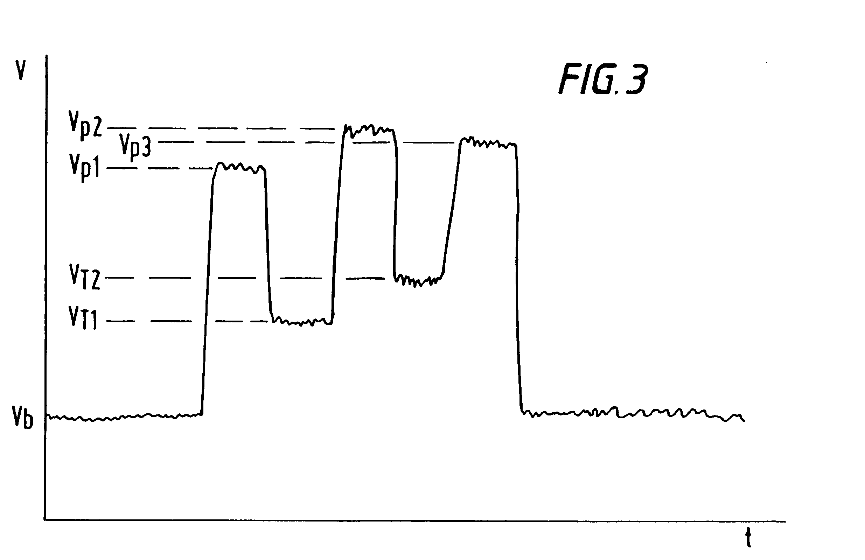

A general form of the output signal 16 generated by the passage of a single particle is shown in Figure 3.

Considering this general form of signal the A-D detector typically generates samples from which mean values of the background voltage $V_b$, a set of three peak voltages $V_{p1}$, $V_{p2}$ and $V_{p3}$ corresponding to each facet of the light source structure and two trough voltages $V_{T1}$ and $V_{T2}$ are generated.

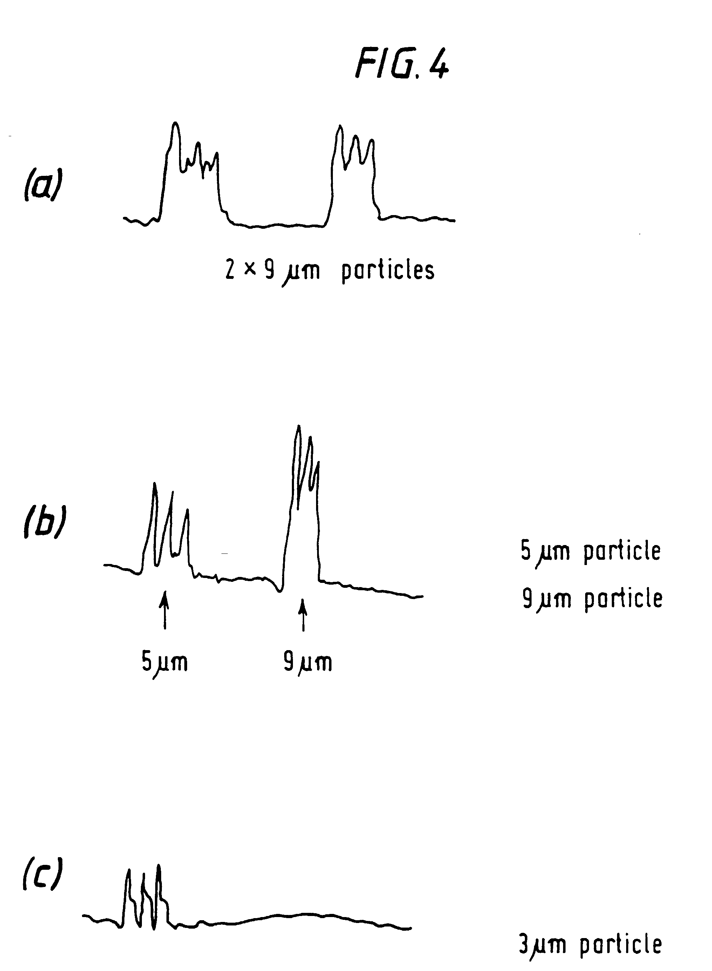

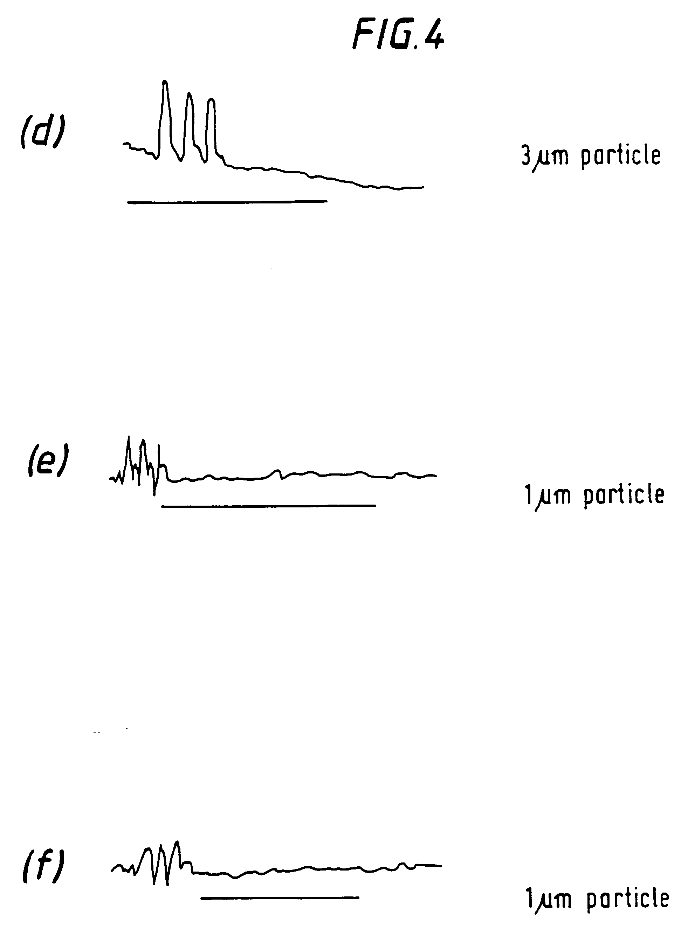

System noise in general varies even during the period of a single pulse, as will be apparent from the experimental results illustrated in figure 4(a)-(f), generally due to thermal and flow effects.

Accordingly values of the mean peak voltages $V_p$ and trough voltages $V_p$ are corrected for the background voltage value by subtracting the latter as is shown in the following equations.

$$V_{pn'} = V_{pn} - V_b$$

$$V_{tn'} = V_{tn} - V_b$$

Further calculations for each particle sampled are then performed

$$\overline{V}_p = \frac{1}{3}\sum_{n=1}^{3} V_{pn}{}'$$

$$\overline{V}_T = \frac{1}{2} \sum_{n=1}^{2} V_{un} \cdot$$

and the visibility V is then calculated

$$\overline{V} = \left( \frac{\overline{V}_P - \overline{V}_T}{\overline{V}_P + \overline{V}_T} \right)$$

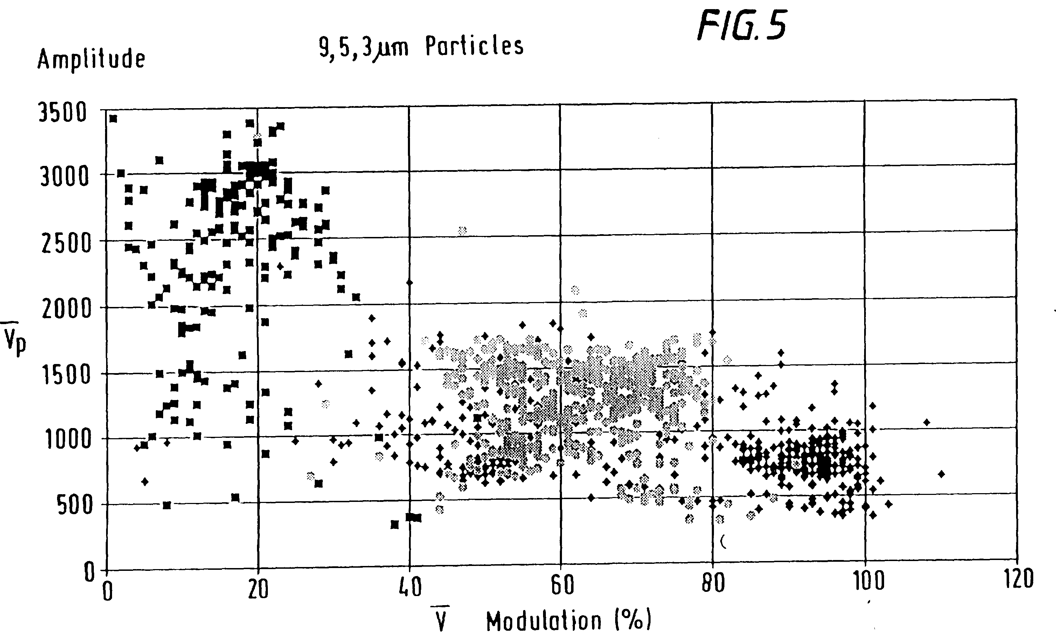

Figure 5 shows particularly clearly the effect of this calculation of the normalised peak-to-trough variation. Thus the layer, i.e. 9um particles shown in the left hand side of the figure are particles which have displayed the highest mean peak scatter level and smallest depth of modulation as defined by the mean visibility of the signal. Similarly the smallest, i.e. 3um particles which occupy the bulk of the right hand side of the figure display the lowest mean peak scatter level and highest depth of modulation.

Evidently for a source having a greater number of facets than 3, corresponding summations for the greater number of peak and trough events can be performed. These calculations are carried out in microprocessor unit 26 and the results displayed at 28. The particle size can be collected and displayed in histogram form or in other suitable form of display to illustrate the sizes of particles present. In general the visibility is found to be a single valued function of the particle size, and calibration of the particle sizing instrument is therefore simplified. Figure 5 shows a scatter plot from experimental results for particles of 9um, 5um and 3um diameters.

The detection optics illustrated in Figure 1 places the detector 16 under dark field illumination when there is no particle present in the inspection volume, due to the stop 20. This has the advantage that the scattered light signal can be focused into a small area detector and all the light collected is employed to generate the output signal, thereby minimizing noise. However as already mentioned the stop may be removed, thereby normally exposing the detector 15 to continuous light illumination. When a particle passes through the inspection volume it partly shadows the detector, lowering the illumination. In that case the signal of figure 3 is in effect inverted, so that $V_p$ and $V_T$ are lower than $V_b$. However the same calculation is performed to extract the visibility and thus the size of the particle. It is normally to be expected however that the noise component of this arrangement is greater than that described above, so that the accuracy of particle size denomination is lower and the least particle size that can be detected greater. The system without stop 20 in as accordingly less practicable where the particles to be measured have poor light absorbtion characteristics, such as bacteria and blood cells.

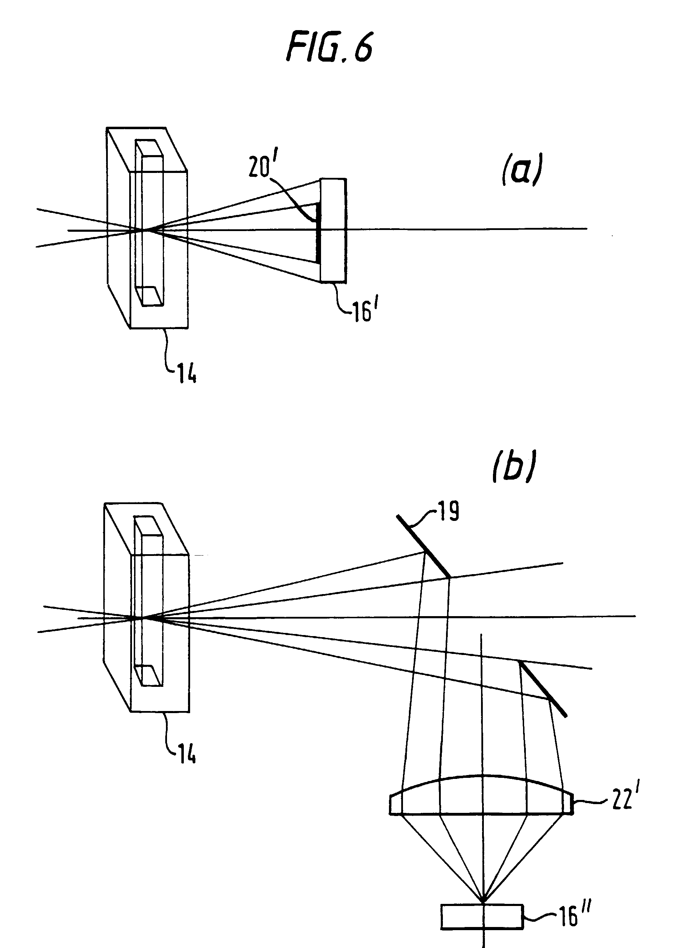

Alternative systems for collecting and detecting the scattered light are illustrated by reference to figure 6, in each case using forward scatter. Alternatively it is perfectly feasible to use either side or back scattered light and in fact the actual geometry chosen may be dictated by the practical constraints of the application.

One alternative light collection system in figure 6(a) comprises a detector 16' partially screened by stop 20' placed adjacent to the flow cell 14. In this case the detector collects the light without the benefit of a collection lens 22, and consequently the detector is somewhat larger in area. Such an arrangement may be built at less cost, but owing to the larger detection area is subject to increased noise in the detection circuit.

A more compact arrangement is also obtained by incorporating the mirror 19 as well as lens 22'. Alternatively the mirror 19 can be appropriately curved so that it also acts as a lens so as to provide a simple component which collects and focuses scattered light from the flow cell 14.

In the prior art the structured light field has been generated interferometrically in the form of fringes by focusing light from a coherent laser source via two paths into the inspection volume. In the present invention a structured light field is developed using incoherent methods and may take a number of forms. One convenient form described above takes the form of a muli-faceted light emitting or laser diode which is focused into the inspection volume by means of suitable cylindrical lenses or an equivalent optical system.

However it will be evident that in general the source may be comprised of a number of structurally separate light sources optically combined by suitable beam splitters and cylindrical lenses to provide an equivalent structured image in the inspection volume; or alternatively may be obtained by an array of slits exposing a common light source suitably focused into the image plane; or alternatively may be obtained from a line source divided by a prism (or prisms) or diffraction grating into two or more line sources: and any other structured light field developed using incoherent imaging methods. The objective of the invention is to develop a structured light field having two or more basis of focused light having a predetermined separation (q) having a low manufacturing cost but providing high light intensity.

Although the invention has been described above with regard to particle size measurement it will be evident that the particle speed may also be extracted by monitoring the frequency of the voltage signals obtained. Additionally particle speed in more than one direction can be measured by having a second structured light field and associated optical system. In such a case the facets of the second field could be orthogonal with respect to those of the first field. It will also be appreciated that apparatus of the types just described could be cascaded along the path of particle flow with the facets being separated by varying distances.

## Claims

1. Apparatus for measuring the size of particles comprising a light source (12) for generating a light field having a plurality of non-interferometrically formed spaced variations in intensity, means (14) for moving particles in a fluid medium through to the light field so that the particles pass transversely and successively through said spaced variations in intensity, and means (16) for detecting variations in light intensity caused by passage of the particles relative to the light field, and further comprising means (26) for calculating the size of a particle by plotting the mean peak signal (V) as a function of the normalised peak-to-trough variation in the output pulses generated by the passages of the particle through the light field, the normalisation being carried out by correcting the peak values for background variations.

2. Apparatus according to claim 1, wherein the means for moving the particles include a conduit adapted to transport a fluid in which the particles are carried, and wherein said light source and said means for detecting are located on either side of said conduit.

3. Apparatus as claimed in claim 2, wherein the light source generates a light field having three spaced variations in intensity.

4. Apparatus as claimed in claim 2 or claim 3, wherein the light source comprises three spaced sources of light generating three parallel beams which extend transverse to the direction of movement of the particles under measurement.

5. Apparatus according to claim 4, and including at least one lens (17, 18) arranged to focus light from the light source into the light field so that the spacing between the variations in intensity is approximately equal to the expected size of a particle to be measured.

6. Apparatus as claimed in any one of claims 1 to 5, in which the conduit is a pipe having a diameter between approximately 100 and 300 microns.

7. Apparatus as claimed in any one of claims 1 to 6, and including a stop (201), to prevent direct illumination of the detecting means, the stop being provided adjacent the light detector so that active area of the light detector only receives light scattered by particles.

8. A particle size measurement method comprising passing particles in a fluid medium relative to a light source (12) which generates a light field the optical axis of which is transverse to the direction of fluid movement relative to the said light source and having a plurality of non-interferometrically formed variations in intensity spaced along the direction of movement of the particles relative to the light field, detecting (16) variations in light intensity caused by the particles as they pass through the variations in the light field, and measuring the size of a detected particle by plotting the mean peak signal as a function of the normalised peak-to-trough variation in the output pulses generated by the passages of the particle through the light field, the normalisation being carried out by correcting the peak values for background variations.

## Patentansprüche

1. Vorrichtung zum Messen der Größe von Teilchen mit einer Lichtquelle (12) zum Erzeugen eines Lichtfeldes mit einer Anzahl von nicht-interferometrisch gebildeten, beabstandeten Intensitätsvariationen, einer Einrichtung (14) zum Bewegen von Teilchen in einem Fluidmedium derart durch das Lichtfeld, daß die Teilchen quer und aufeinanderfolgend die räumlichen Intensitätsvariationen durchlaufen, und mit einer Einrichtung (16) zum Erfassen von Änderungen in der Lichtintensität, die durch das Durchlaufen des Lichtfeldes durch die Teilchen entstehen, und mit einer weiteren Einrichtung (26) zum Berechnen der Größe eines Teilchens durch das Darstellen des mittleren Spitzenwertsignals (V) als Funktion der normalisierten Spitze-Trog-Variation in den Ausgangsimpulsen, die beim Durchlaufen der Teilchen durch das Lichtfeld erzeugt werden, wobei die Normalisation durch eine Korrektur der Spitzenwerte bezüglich der Hintergrundvariationen ausgeführt wird.

2. Vorrichtung nach Anspruch 1, wobei die Einrichtung zum Bewegen der Teilchen eine Leitung umfaßt, die dafür vorgesehen ist, ein Fluid zu transportieren, von dem die Teilchen mitgenommen werden, und wobei sich die Lichtquelle und die genannte Erfassungseinrichtung auf den beiden Seiten der Leitung befinden.

3. Vorrichtung nach Anspruch 2, wobei die Lichtquelle ein Lichtfeld mit drei beabstandeten Intensitätvariationen erzeugt.

4. Vorrichtung nach Anspruch 2 oder 3, wobei die Lichtquelle drei beabstandete Lichtquellen umfaßt, die drei parallele Lichtstrahlen erzeugen, die sich quer zur Bewegungsrichtung der zu messenden Teilchen ausbreiten.

5. Vorrichtung nach Anspruch 4, mit wenigstens einer Linse (17, 18), die so angeordnet ist, daß das Licht von der Lichtquelle so in das Lichtfeld fokussiert wird, daß der Abstand zwischen den Intensitätsvariationen etwa gleich der erwarteten Größe der zu messenden Teilchen ist.

6. Vorrichtung nach einem der Ansprüche 1 bis 5, wobei die Leitung ein Rohr mit einem Durchmesser zwischen etwa 100 und 300 Mikrometern ist.

7. Vorrichtung nach einem der Ansprüche 1 bis 6, mit einer Blende (20), die ein direktes Beleuchten der Erfassungseinrichtung verhindert, wobei die Blende derart angrenzend an den Lichtdetektor vorgesehen ist, daß der aktive Bereich des Lichtdetektors nur Licht aufnimmt, das von Teilchen gestreut wurde.

8. Verfahren zum Messen einer Teilchengröße, mit dem Vorbeilaufen von Teilchen in einem Fluidmedium relativ zu einer Lichtquelle (12), die ein Lichtfeld erzeugt, dessen optische Achse relativ zur Lichtquelle quer zur Richtung der Fluidbewegung verläuft und das eine Anzahl von nicht-interferometrisch gebildeten Intensitätsvariationen aufweist, die in der Bewegungsrichtung der Teilchen relativ zum Lichtfeld beabstandet sind, dem Erfassen (16) von Änderungen in der Lichtintensität, die von den Teilchen verursacht werden, wenn sie durch die Variationen im Lichtfeld laufen, und dem Messen der Größe eines erfaßten Teilchens durch Darstellen des mittleren Spitzenwertsignals als Funktion der normalisierten Spitze-Trog-Variation in den Ausgangsimpulsen, die beim Durchgang der Teilchen durch das Lichtfeld entstehen, wobei die Normalisation durch Korrektur der Spitzenwerte bezüglich der Hintergrundvariationen ausgeführt wird.

**Revendications**

1. Dispositif pour mesurer la taille de particules comprenant une source de lumière (12) pour émettre un champ lumineux avant une pluralité de variations d'intensité espacées de forme non-interférométrique, des moyens (14) pour déplacer les particules dans un milieu fluide à travers le champ lumineux de manière à ce que les particules passent transversalement et successivement à travers lesdites variations d'intensité espacées, et des moyens (16) pour détecter les variations de l'intensité lumineuse provoquées par le passage des particules relatif au champ lumineux, et comprenant de plus des moyens (26) pour calculer la taille d'une particule en traçant le signal de crête moyen (V) en fonction de la variation maximum-minimum des impulsions de sortie normalisée créés par les passages des particules à travers le champ lumineux, la normalisation étant effectuée par une correction des valeurs de crête par rapport aux variations en arrière plan.

2. Dispositif selon la revendication 1, dans lequel les moyens pour déplacer les particules comprennent une conduite convenant au transport d'un fluide dans laquelle les particules sont transportées, et dans laquelle ladite source de lumière et lesdits moyens pour détecter sont situés sur chaque coté de ladite conduite.

3. Dispositif selon la revendication 2, dans lequel la sourcc de lumière émet un champ lumineux présentant trois variations d'intensité espacées.

4. Dispositif selon la revendication 2 ou 3, dans lequel la source de lumière comprend trois sources de lumière espacées produisant trois faisceaux parallèles qui s'étendent transversalement à la direction de déplacement des particules sous mesure.

5. Dispositif selon la revendication 4, et comprenant au moins une lentille (17, 18) disposée afin de focaliser la lumière de la source de lumière dans le champ lumineux de sorte à ce que l'espacement entre les variations d'intensité soit environ égale à la taille prévue de la particule destinée à être mesurée.

6. Dispositif selon l'une quelconque des revendications 1 à 5, dans lequel la conduite est un tube présentant un diamètre compris entre environ 100 et 300 microns.

7. Dispositif selon l'une quelconque des revendications 1 à 6, et comprenant un arrêt (20) pour empêcher l'illumination directe des moyens de détection, l'arrêt étant prévu adjacent au détecteur de lumière de sorte que la surface active du détecteur reçoive seulement la lumière diffusée par les particules.

8. Un procédé de mesure de la taille des particules comprenant le déplacement dc particules dans un milieu fluide par rapport à une source de lumière (12) qui génère un champ lumineux dont l'axe optique est transversal à la direction de déplacement du fluide relatif à ladite source de lumière et présentant une pluralité de variations d'intensité de forme non-interférométrique espacées le long de la direction de déplacement des particules par rapport au champ lumineux. la détection (16) des variations de l'intensité lumineuse provoquées par des particules lorsqu'elles passent à travers les variations du champ lumineux, et la mesure de la taille d'une particule détectée en traçant le signal de crête moyen (V) en fonction de la variation maximum-minimum des impulsions de sortie normalisée créés par les passages des particules à travers le champ lumineux, la normalisation étant effectuée par une correction des valeurs de crête par rapport aux variations en arrière plan.

FIG.1

FIG.1A

FIG.2

EP 0 579 829 B1

FIG.3

EP 0 579 829 B1

# FIG. 4

(a)

2 × 9 μm particles

(b)

5 μm

9 μm

5 μm particle

9 μm particle

(c)

3 μm particle

# FIG.4

(d)                                    3 μm particle

(e)                                    1 μm particle

(f)                                    1 μm particle

FIG.5

9,5,3 μm Particles

Amplitude

EP 0 579 829 B1

# FIG. 6

(a)

20'

16'

14

(b)

19

14

22'

16''